# EUROPÄISCHE PATENTANMELDUNG

(11) **EP 0 861 601 A1**
(43) Veröffentlichungstag der Anmeldung: **02.09.1998**
(21) Anmeldenummer: 98103169.3
(22) Anmeldetag: 24.02.1998
(51) Int. Cl.: A23L 1/32

(54) **Lebensmittel-Zubereitung auf Ei-Basis**

(30) Priorität: 26.02.1997 DE 29703492 U
(71) Anmelder: Kottemann, Fritz, 59229 Ahlen (DE)
(72) Erfinder: Kottemann, Fritz, 59229 Ahlen (DE)
(74) Vertreter: Strauss, Hans-Jochen, Dipl.-Phys., Dr.

(57) **Zusammenfassung**

Um eine Lebensmittel-Zubereitung (1) auf Eibasis so weiterzubilden, daß sie in beliebigen Größen und Formen eingesetzt werden kann, wird ein Schichtaufbau vorgeschlagen, aus mindestens einer Eiweißschicht (5) auf die nach Stocken durch Wärmeinwirkung Eigelb (6; 6.1) aufgebracht und beide durch Wärmeeinwirkung gegart sind, wobei der Schichtaufbau auch mehrschichtig sein kann; zur Herstellung werden Eiweiß und Eigelb getrennt, das abgetrennte Eiweiß als Eiweißschicht (5) ausgegossen und zumindest angestockt, Eigelb als die Eiweißschicht (5) zumindest teilweise überdeckende Eigelbschicht (6, 6.1) aufgebracht und zumindest angestockt wird, dass dieses Aufgießen bis zum Erreichen der gewünschten Schichtfolge fortgesetzt und die so erhaltenen Lebensmittel-Zubereitung (1) unter Wärme-Einwirkung fertig gegart wird.

## Beschreibung

Die Erfindung betrifft eine Lebensmittel-Zubereitung auf Ei-Basis.

Zum unmittelbaren Verzehr sind gekochte oder gebratene Eier bekannt, wobei das gebratene Spiegelei einseitig oder auch beidseitig angebraten sein kann. Solche so zubereiteten Eier werden auch auf Brot aufgelegt, um beispielsweise mit Schinken als "Strammer Max" angeboten und verzehrt zu werden. In anderen Fällen werden Scheiben gekochter Eier zur Verzierung und Dekoration von Salaten oder Snacks eingesetzt. Dabei ist insbesondere die Größe vom Ei abhängig; es besteht ein Bedürfnis, diese Abhängigkeit zu verlassen. Bekannt ist es, Eiweiß und Eigelb zu trennen und in Form einer Eirolle zu garen; diese einem gekochten Ei entsprechende Eirolle kann in Scheiben geschnitten und als Belag für Brötchen oder Baguettes oder zur Dekoration benutzt werden. Somit ergibt sich die der Erfindung zugrundeliegende Aufgabe, ein Lebensmittel-Zubwereitung auf Ei-Basis so weiterzubilden, daß sie in beliebigen Größen und Formen sowohl zum Verzehr als auch zur Dekoration eingesetzt werden kann.

Diese Aufgabe wird gelöst durch die im Hauptanspruch mit den kennzeichnenden Merkmalen beschriebene Ausführungsform; vorteilhafte Weiterbildungen und bevorzugte Ausführungsformen beschreiben die Unteransprüche.

Nach der Erfindung besteht die Lebensmittel-Zubereitung aus zumindest zwei Schichten, einer Schicht Eiweiß und einer Schicht Eigelb, die miteinander vernetzt sind. Hierzu wird zunächst eine Schicht Eiweiß gegart und so zur Gerinnung gebracht und auf diese Schicht eine Schicht Eigelb aufgebracht, die dann anschließend gegart und zur Gerinnung gebracht wird. Durch dieses Nacheinander erfolgt das Vernetzen beider Schichten zumindest in Teilbereichen, vorzugsweise jedoch über die gesamte Fläche, so daß eine gute Haftung der an sich voneinander getrennten Schichten bewirkt wird, und daß so eine flache Doppelschicht in den Farben weiß/gelb entsteht. Dabei versteht es sich von selbst, daß die Masse auch entsprechend gewürzt zum Einsatz gebracht wird.

In einer vorteilhaften Weiterbildung wird eine weitere Schicht Eiweiß aufgebracht und gegart und so zur Gerinnung gebracht. Auch diese Schicht ist wiederum mit der vorgehenden Schicht gegart, und es entsteht ein Produkt mit der Farbfolge weiß/gelb/weiß. Diese Ausbildungen werden flach in eine gewünschte Form gebracht und eignen sich so zum Verzehr, wobei es sich von selbst versteht, daß diese Form auch als Beilage oder als Belag von Brot oder Brötchen geeignet ist und wobei es sich auch von selbst versteht, daß die natürlichen Farben "weiß" und "gelb" auch durch Lebensmittelfarben verändert werden können.

In einer ersten bevorzugten Ausführungsform wird die obere Schicht dieser flachen Formen mit Einlagen versehen, die zerkleinert als Streifen, Würfel oder sonstige Abschnitte in die oberste Schicht eingebracht werden. Als Einlagen eignen sich alle Gemüsearten, insbesondere farblich auffallende Gemüsearten, wie beispielsweise Paprika oder Tomate; andere Einlagen bestehen aus Fleisch oder Fleischprodukten, insbesondere aus Wurst oder Schinken, wiederum andere Einlagen bestehen aus Käse oder dergleichen. Auch können - insbesondere um vegetarisch lebenden Verbrauchern entgegen zu kommen - pastöse Zubereitungen auf Soja-Basis eingesetzt werden, die geschmacklich (und ggf. auch farblich) entsprechend zubereitet werden.

In einer zweiten bevorzugten Ausführungform werden viele Schichten in der beschriebenen Wechselfolge aufeinander gebracht und die so erhaltene hohe Lebensmittel-Zubereitung wird quer zu den Schichten geschnitten. So entstehen Scheiben mit einer vielfachen Farbabfolge weiß/gelb/weiß/ ... /gelb/weiß, die sich sehr gut zum Dekorieren eignen.

Zur Herstellung wird das Eiweiß flach ausgegossen auf eine heiße Platte gegeben wo es gegart wird. Nach Stocken wird eine Schicht Eigelb aufgegossen, die dann ebenfalls unter Hitzeeinwirkung zum Stocken gebracht wird. Andere Möglichkeiten sind in Durchlauföfen gegeben, wobei der Durchlaufofen einzelne aufeinanderfolgende Tunnel aufweist, zwischen denen die Eiweiß- bzw. Eigelb-Masse aufgegeben wird. Die Massen werden so portioniert und im Abstand voneinander auf ein Band so aufgebracht, dass die vorher aufgebrachte Masse zumindest angestockt ist, wenn die folgende der Massen aufgebracht wird.

Werden weitere Schichten gewünscht, werden abwechselnd Eiweiß- und Eigelbschichten aufgegossen und durch weitere Wärmeeinwirkung zum Stocken gebracht, bis der gewünschte Aufbau erreicht ist. Eine Wärmeunterstützung von der Oberseite beschleunigt dieses Stocken; diese vorteilhaft durch Wärmestrahlung eingebrachte Ober-Wärme verhindert eine unerwünschte Überhitzung der unteren Lagen und so eine damit verbundene Denaturierung der natürlichen Eiweiße des Eies. Auch können insbesondere zum Durchgaren Mikrowellenfelder eingesetzt werden, die in den entsprechenden Zonen für die gewünschte Wärmezufuhr Sorge tragen. Ob dabei mit einer die Geometrie bestimmenden Form gearbeitet wird, oder ob die Schicht breitflächig ausgegossen und nach Fertigstellung in Form geschnitten oder ausgestochen wird, ist dabei ohne Bedeutung. Die Höhe der jeweiligen Lagen kann durch die Menge der aufgegossenen Eimasse bestimmt werden; besonders bei größeren Flächen ist jedoch der Einsatz einer Rakel vorzuziehen. Auch ist eine kontinuierliche Fertigung am Band denkbar, wobei die einzelnen Schichten jeweils nacheinander aufgebracht werden, und wobei jede Schicht vor dem Aufbringen der folgenden durch Wärmeeinwirkung zum Stocken gebracht wird und das ganze - wenn noch notwendig - insgesamt unter Wärmeeinwirkung durchgegart wird. Das fertige Produkt wird dann vorteilhaft abgekühlt und vereinzelt in Folientaschen vakuumverpackt zum Versand gebracht.

Mit Hilfe dieser Technik lassen sich Beläge für Brot, Brötchen oder Baguettes herstellen, die sich wegen ihres Schichtaufbaues (der besonders bei schräg angeschnittenem, vielschichtigem Aufbau zur Geltung kommt) für dekorative Party-Platten eignen, die jedoch auch - etwa zwischen Salatblätter oder Gurkenscheiben gelegt - anstelle von Hackfleich- oder Wursteinlagen für Snacks benutzt werden können. Dabei können diese Einlagen durch entsprechende Würzung oder durch die beschriebenen Einlagen geschmacklich verfeinert werden.

Das Wesen der Erfindung wird an Hand der in den Figuren 1 bis 4 dargestellen Ausführungsbeispielen näher erläutert; dabei zeigen:
- Fig. 01:: Lebensmittel-Zubereitung mit flachem, scheibenförmig ausgebildeten Schichtaufbau Eiweiß, auf den Eigelb aufgebracht ist (teil-geschnitten);
- Fig. 02:: Lebensmittel-Zubereitung mit flachem, scheibenförmig ausgebildeten Schichtaufbau Eiweiß/Eigelb (geschnitten);
- Fig. 03:: Lebensmittel-Zubereitung mit Schichtaufbau entsprechend Figur 2, jedoch mit Dreifach-Schichtung Eiweiß/Eigelb/Eiweiß und mit Einlagen in der obersten Schicht (perspektivisches Schema, teilgeschnitten);
- Fig. 04:: Lebensmittel-Zubereitung mit vielschichtigem Schichtaufbau mit abwechselnder Schichtfolge Eiweiß/Eigelb, in Würfel geschnitten (perspektivisches Schema).

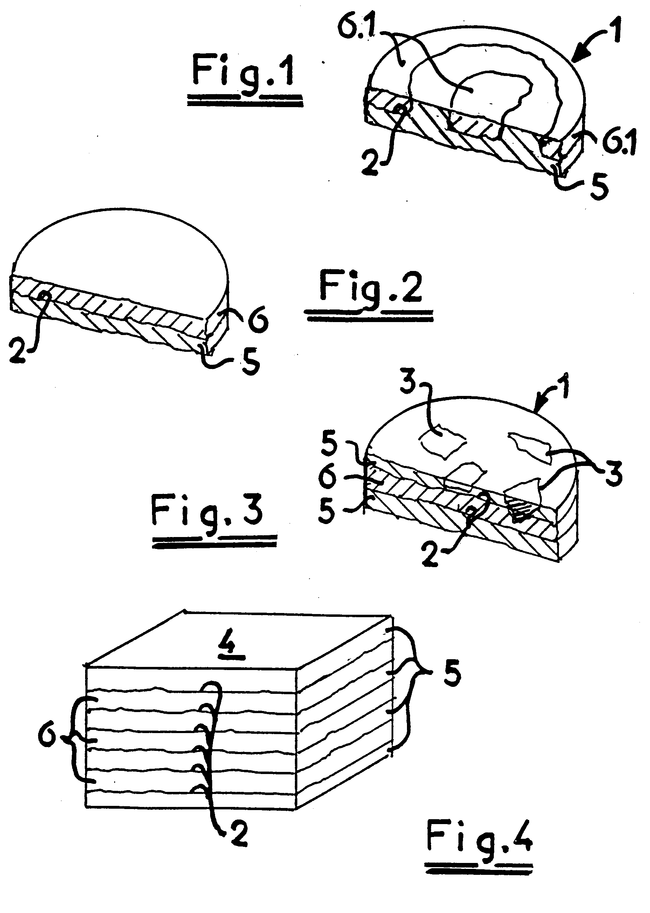

Die Figur 1 zeigt ein Basis-Beispiel einer erfindungsgemäßen Lebensmittel-Zubereitung. Eine flache Scheibe 1, gebildet von einer ersten, als Eiweißschicht ausgebildeten Schicht 5 ist gestockt; auf diese gestockte Schicht wird Eigelb aufgegossen, so dass diese Einweißschicht 5 teilweise mit Eigelb-Auflagen 6.1 abgedeckt ist. Diese so gebildete flache Scheibe wird dann insgesamt gegart.

Die Figuren 2 und 3 zeigen eine flache Scheibe 1 einer erfindungsgemäßen Lebensmittel-Zubereitung, das aus den beiden Schichten 5 und 6 aufgebaut ist, wobei etwa die Schicht 5 als weiße Eiweiß-Schicht und 6 als gelbe Eigelb-Schicht anzusehen sind; während die Fig. 2 eine Doppel-Schichtung zeigt, ist in Fig. 3 eine Dreifach-Schichtung dargestellt, wobei sich jeweils eine (weiße) Eiweiß-Schicht 5 und eine (gelbe) Eigelb-Schicht 6 abwecheseln. In den Grenzflächen 2 findet die Vernetzung statt, die die Schichten aufeinander fixiert. In der obersten Schicht sind Einlagen 3 vorgesehen, die infolge ihrer Dicke auch in darunter liegende Schichten reichen können.

Die Figur 4 zeigt die flache Scheibe 1 der Lebensmittel-Zubereitung mit Vielfach-Schichtung, die zur Verwendung in Würfel 4 aufgeschnitten ist. Hier wechseln sich eine Mehrzahl von weißen Schichten 5 aus Eiweiß und gelbe Schichten 6 aus Eigelb ab, so daß sich die Lebensmittel-Zubereitung auch in einer dekorativen Ansicht darstellt. Wie bei dem Lebensmittel mit Doppel- oder mit Dreifach-Schichtung sind auch hier die Grenzflächen 2 die Vernetzungsbereiche, die das Halten der Schichten aufeinander sicherstellen.

## Patentansprüche

1. Lebensmittel-Zubereitung (1) auf Ei-Basis, **gekennzeichnet durch** einen Schichtaufbau aus mindestens einer Eiweißschicht (5), auf die nach Stocken durch Wärmeinwirkung Eigelb (6; 6.1) aufgebracht und beide durch Wärmeeinwirkung gegart sind.

2. Lebensmittel-Zubereitung (1) nach Anspruch 1, **dadurch gekennzeichnet**, dass das Eigelb eine durchgehende Eigelbschicht (6) auf der Eiweißschicht (5) bildet.

3. Lebensmittel-Zubereitung (1) nach Anspruch 2, **dadurch gekennzeichnet**, daß sowohl als unterste Schicht als auch als oberste Schicht eine Eiweißschicht (5) vorgesehen sind.

4. Lebensmittel-Zubereitung (1) nach Anspruch 2, **gekennzeichnet durch** einen zumindest dreischichtigen Aufbau mit der Abfolge Eiweißschicht(5)/Eigelbschicht(6)/Eiweißschicht(5), vorzugsweise einen vielschichtigen Aufbau, bei dem Eiweiß- und Eigelbschichten (5, 6) abwechselnd angeordnet sind.

5. Lebensmittel-Zubereitung (1) nach einem der Ansprüche 1 bis 4, **dadurch gekennzeichnet**, daß die gesamte Berührungsfläche einer Eweiß- und einer Eigelbschicht (5, 6) eine Vernetzungsfläche (2) bildet.

6. Lebensmittel-Zubereitung (1) nach einem der Ansprüche 1 bis 5, **dadurch gekennzeichnet**, daß zumindest eine der Eiweißschichten und/oder der Eigelbschicht (5, 6) durch Zusatz einer Lebensmittelfarbe eingefärbt ist.

7. Lebensmittel-Zubereitung (1) nach einem der Ansprüche 1 bis 6, **dadurch gekennzeichnet**, daß zumindest die oberste der Schichten (5, 6) Einlagen (3) enthält.

8. Lebensmittel-Zubereitung (1) nach Anspruch 7, **dadurch gekennzeichnet**, daß als Einlagen (3) Scheiben, Schnitzel oder sonstige Abschnitte von Gemüsen und/oder von Fleisch oder Fleischprodukten und/oder von Käse, vorzugsweise von Hartkäse vorgesehen sind.

9. Verfahren zur Herstellung einer Lebensmittel-Zubereitung (1) auf Eibasis nach einem der Ansprüche 1 bis 8, **dadurch gekennzeichnet**, dass Eiweiß und Eigelb getrennt werden, das abgetrennte Eiweiß als Eiweißschicht (5) ausgegossen und zumindest angestockt wird, Eigelb als die Eiweißschicht (5) zumindest teilweise überdeckende Eigelbschicht (6, 6.1) aufgebracht und zumindest angestockt wird, dass dieses Auf-gießen bis zum Erreichen der gewünschten Schichtfolge fortgesetzt wird, dass die so erhaltenen Lebensmittel-Zubereitung (1) unter Wärme-Einwirkung fertig gegart wird.

10. Verfahren nach Anspruch 8, **dadurch gekennzeichnet**, daß aufeinander folgende Eiweiß-/Eigelbschichten (5, 6) dann flüssig aufgegossen werden, wenn die jeweils vorgehende der Eigelb- oder Eiweißschichten (6; 5) durch Wärmeeinwirkung zumindest angestockt ist, um die Schichten zumindest in Teilbereichen zu vernetzen.
